# EUROPEAN PATENT APPLICATION

(11) **EP 4 723 069 A1**
(43) Date of publication of application: **08.04.2026**
(21) Application number: 23938539.6
(22) Date of filing: 25.05.2023
(51) Int. Cl.: G07C 9/37

(54) **INFORMATION PROCESSING SYSTEM, MEMBER FOR INFORMATION PROCESSING SYSTEM, AND METHOD FOR MANUFACTURING MEMBER FOR INFORMATION PROCESSING SYSTEM**

(71) Applicant: NEC Corporation, 108-8001 Tokyo (JP)
(72) Inventor: OSAKA, Masahiko, Tokyo 108-8001 (JP); OGINO, Yuka, Tokyo 108-8001 (JP); YAMAKABE, Ryo, Tokyo 108-8001 (JP); SASAKI, Masato, Tokyo 108-8001 (JP); OAMI, Ryoma, Tokyo 108-8001 (JP); SHIINA, Misao, Tokyo 108-8001 (JP)
(74) Representative: Betten & Resch
(86) International application number: PCT/JP2023/019529
(87) International publication number: WO 2024/241577

(57) **Abstract**

An information processing system includes: a passage part through which a user passes; and an iris capture unit that captures an image of an iris of the user passing through the passage part. The passage part is formed such that a central area through which the user passes is lower than surrounding areas around the central area. According to such an information processing system, it is possible to guide the user to pass through the central area and appropriately capture the image including the iris of the user.

## Description

### Technical Field

The present disclosure relates to technical fields of an information processing system, an information processing system member, and a method for manufacturing the information processing system member.

### Background Art

A known system of this type captures an image of a target passing through a specific area and performs various types of processing. For example, Patent Literature 1 discloses a technique/technology for capturing images of passersby in a monitoring area and displaying them on a monitor monitored by personnel/staff. Patent Literature 2 discloses a technique/technology for capturing a facial image of a visitor attempting to enter through an entrance door and acquiring it as biometric information. Patent Literature 3 discloses a technique/technology for guiding those who pass through a passageway leading to a gate, to face a camera during image capture.

### Citation List

### Patent Literature

[Patent Literature 1] JPH07-302390A
[Patent Literature 2] JP2009-138490A
[Patent Literature 3] International Publication No. WO2021/156996

### Summary

### Technical Problem

The present disclosure aims to improve the techniques/technologies disclosed in Citation List.

### Solution to Problem

An information processing system according to an example aspect of the present disclosure includes: a passage part through which a user passes; and an iris capture unit that captures an image of an iris of the user passing through the passage part. The passage part is formed such that a central area through which the user passes is lower than surrounding areas around the central area.

An information processing system member according to an example aspect of the present disclosure is an information processing system member to be used in an information processing system including an iris capture unit that captures an image of an iris of a user passing through a passage part, the information processing system member including: an area formation unit that forms the passage part such that a central area through which the user passes is lower than surrounding areas around the central area.

A method of manufacturing an information processing system member according to an example aspect of the present disclosure is a method for manufacturing an information processing system member to be used in an information processing system including an iris capture unit that captures an image of an iris of a user passing through a passage part, the method including: forming an area formation unit that forms the passage part such that a central area through which the user passes is lower than surrounding areas around the central area.

### Brief Description of Drawings

[FIG. 1] FIG. 1 is a block diagram illustrating a hardware configuration of an information processing system according to a first example embodiment.
[FIG. 2] FIG. 2 is a side view illustrating a specific configuration of the information processing system according to the first example embodiment.
[FIG. 3] is a flowchart illustrating a flow of operation of the information processing system according to the first example embodiment.
[FIG. 4] FIG. 4 is a top view illustrating a configuration of a passage part of the information processing system according to the first example embodiment.
[FIG. 5] FIG. 5 is a cross-sectional view illustrating the configuration of the passage part of the information processing system according to the first example embodiment.
[FIG. 6] FIG. 6 is version 1 of a cross-sectional view illustrating a configuration of a passage part of an information processing system according to a second example embodiment.
[FIG. 7] FIG. 7 is version 2 of a cross-sectional view illustrating the configuration of the passage part of the information processing system according to the second example embodiment.
[FIG. 8] FIG. 8 is a top view illustrating a configuration of a passage part of an information processing system according to a third example embodiment.
[FIG. 9] FIG. 9 is a top view illustrating a configuration of a passage part of an information processing system according to a fourth example embodiment.
[FIG. 10] FIG. 10 is a top view illustrating a configuration of a passage part of an information processing system according to a fifth example embodiment.
[FIG. 11] FIG. 11 is a perspective view illustrating a configuration of an information processing system member according to a sixth example embodiment.
[FIG. 12] FIG. 12 is a perspective view illustrating a configuration of an information processing system member according to a seventh example embodiment.

### Description of Example Embodiments

Hereinafter, an information processing system, an information processing system member, and a method for manufacturing the information processing system member will be described with reference to the drawings.

### <First Example Embodiment>

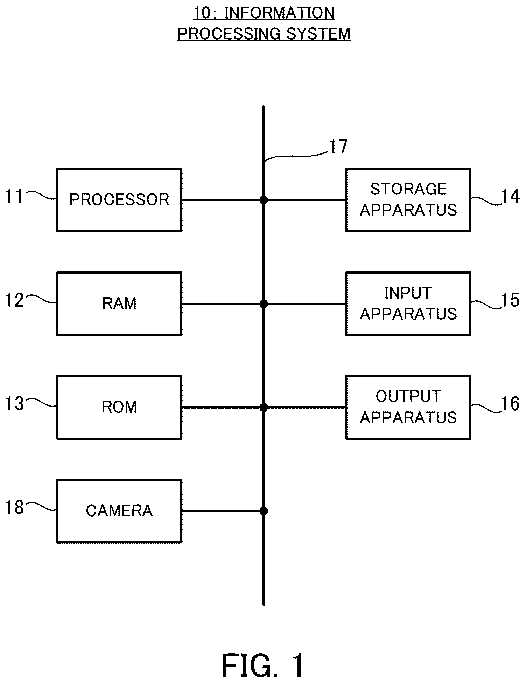

An information processing system according to a first example embodiment will be described with reference to FIG. 1 to FIG. 5.

### (Hardware Configuration)

First, with reference to FIG. 1, a hardware configuration of the information processing system according to the first example embodiment will be described. FIG. 1 is a block diagram illustrating the hardware configuration of the information processing system according to the first example embodiment.

As illustrated in FIG. 1, an information processing system 10 according to the first example embodiment includes a processor 11, a RAM (Random Access Memory) 12, and a ROM (Read Only Memory) 13. The information processing system 10 may further include a storage apparatus 14, an input apparatus 15, and an output apparatus 16. The information processing system 10 also includes a camera 18. The processor 11, the RAM 12, the ROM 13, the storage apparatus 14, the input apparatus 15, the output apparatus 16, and the camera 18 described above are connected via a data bus 17. Note that the data bus 17 may be an interface other than a data bus (e.g., a LAN, a USB, etc.).

The processor 11 reads a computer program. For example, the processor 11 is configured to read a computer program stored in at least one of the RAM 12, the ROM 13, and the storage apparatus 14. Alternatively, the processor 11 may read a computer program stored on a computer-readable recording medium, by using a not-illustrated recording medium reading apparatus. The processor 11 may also acquire (i.e., read) a computer program from a not-illustrated apparatus disposed outside the information processing system 10 via a network interface. The processor 11 controls the RAM 12, the storage apparatus 14, the input apparatus 15, and the output apparatus 16 by executing the read computer program. Especially in the present example embodiment, when the processor 11 executes the read computer program, a function block for capturing images of an iris of a target passing through a passage part is realized in the processor 11. That is, the processor 11 may function as a controller that performs each control in the information processing system 10.

The processor 11 may be configured, for example, as a CPU (Central Processing Unit), a GPU (Graphics Processing Unit), a FPGA (field-programmable gate array), a DSP (Digital Signal Processor), an ASIC (Application Specific Integrated Circuit), or a quantum processor. The processor 11 may be configured by using one of them, or a plurality of them in parallel.

The RAM 12 temporarily stores the computer program to be executed by the processor 11. The RAM 12 temporarily stores data that are temporarily used by the processor 11 when the processor 11 is executing the computer program. The RAM 12 may be, for example, a D-RAM (Dynamic Random Access Memory) or a SRAM (Static Random Access Memory). In addition, another type of volatile memory may be used in place of the RAM 12.

The ROM 13 stores the computer program to be executed by the processor 11. The ROM 13 may also store other fixed data. The ROM 13 may be, for example, a P-ROM (Programmable Read Only Memory) or an EPROM (Erasable Read Only Memory). In addition, another type of nonvolatile memory may be used in place of the ROM 13.

The storage apparatus 14 stores data that are stored by the information processing system 10 for a long time. The storage apparatus 14 may operate as a transitory storage apparatus of the processor 11. The storage apparatus may store the computer program to be executed by the processor 11. The storage apparatus 14 may include, for example, at least one of a hard disk apparatus, a magneto-optical disk apparatus, a SSD (Solid State Drive), and a disk array apparatus.

The input apparatus 15 is an apparatus that receives an input instruction from a user of the information processing system 10. The input apparatus 15 may include, for example, at least one of a keyboard, a mouse, and a touch panel. The input apparatus 15 may be configured as a portable terminal such as a smartphone and a tablet. The input apparatus 15 may be an apparatus that allows audio input/voice input, including a microphone, for example. The input apparatus 15 may be used, for example, solely for maintenance purposes. In such a case, the input apparatus 15 may be omitted as appropriate from components used in operation of the information processing system 10.

The output apparatus 16 is an apparatus that outputs information about the information processing system 10 to the outside. For example, the output apparatus 16 may be a display apparatus (e.g., a display) that is configured to display the information about the information processing system 10. The output apparatus 16 may be configured as a portable terminal such as a smartphone and a tablet. Furthermore, the output apparatus 16 may be an apparatus that outputs information in a format other than an image. For example, the output apparatus 16 may be a speaker that audio-outputs the information about the information processing system 10.

The camera 18 is configured to capture an image including the iris of the target. Note that the target here is not limited to humans, and may also include animals such as cats and dogs, and the like. The camera 18 may be configured, for example, as a near-infrared camera. Furthermore, a plurality of cameras 18 may be provided. In such a case, the camera 18 may include a plurality of types of cameras. For example, the camera 18 may include a near-infrared camera and a visible light camera. Additionally, the camera 18 may be a camera that captures a still image, or a camera that captures a video.

A part of the hardwwill be described in FIG. 1 may be provided as an external apparatus of the information processing system 10. For example, the information processing system 10 may be configured to include only the processor 11, the RAM 12, the ROM 13, and the camera 18 described above. The other components (i.e., the storage apparatus 14, the input apparatus 15, and the output apparatus 16) may be provided in an external apparatus connected to the information processing system 10. Furthermore, the information processing system 10 may realize a part of an arithmetic function by using an external apparatus (e.g., an external server or cloud, etc.).

### (System Configuration)

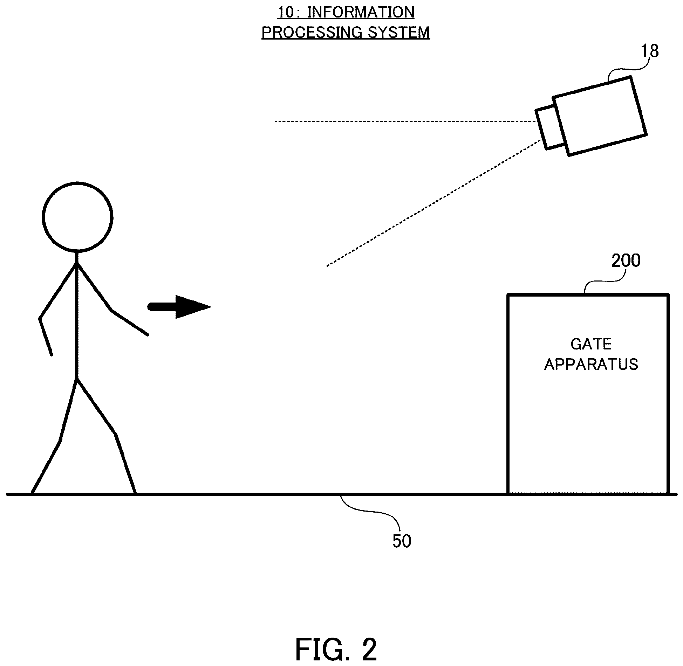

Next, with reference to FIG. 2, a specific configuration of the information processing system 10 according to the first example embodiment will be described. FIG. 2 is a block diagram illustrating the specific configuration of the information processing system according to the first example embodiment.

In FIG. 2, the information processing system 10 according to the first example embodiment is configured as a system that captures an image of a target with the camera 18. The camera 18 is configured to capture an image including at least the iris of the target. However, the camera 18 may also be configured to capture an image including an element other than the iris (e.g., a facial image, etc.). The information processing system 10 according to the first example embodiment may be installed in various facilities such as, for example, airports, stores, offices, and theme parks. In this case, the image captured by the camera 18 may be used for biometric authentication performed in various facilities. For example, the image captured by the camera 18 may be used for iris recognition using a feature quantity related to the iris of the target. In this case, a result of the iris recognition may be used to determine whether or not the target is allowed to pass through a gate.

As illustrated in FIG. 2, in the information processing system 10 according to the first example embodiment, the iris recognition is performed on a target attempting to pass through a gate apparatus 200. Specifically, the target attempting to pass through the gate apparatus 200, goes through a passage part 50 toward the gate apparatus 200. A configuration at that time is such that the camera 18 captures an image of the iris of the target passing through the passage part 50, and then, the iris recognition is performed.

The passage part 50 is configured as a passageway leading to the gate apparatus 200 and is provided, for example, in an area immediately before the gate apparatus 200. The passage part 50 may also extend to an inner side of the gate apparatus 200. Note that the information processing system 10 may be configured without the gate apparatus 200. In this case, the passage part 50 may only be provided in an authentication area where authentication is performed on the target. A more specific configuration of the passage part 50 will be described in detail later.

### (Flow of Operation)

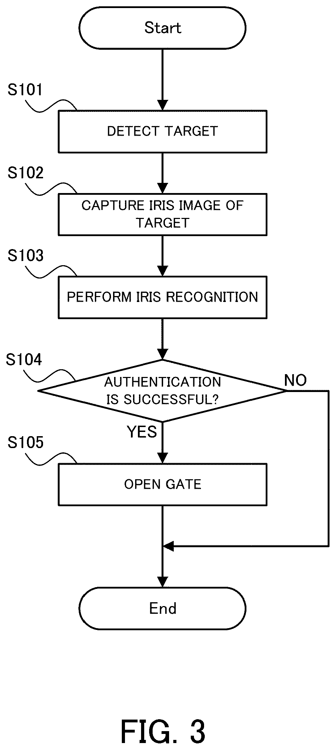

Next, with reference to FIG. 3, a flow of operation of the information processing system 10 according to the first example embodiment will be described. FIG. 3 is a flowchart illustrating the flow of the operation of the information processing system according to the first example embodiment.

As illustrated in FIG. 3, when the operation by the information processing system 10 according to the first example embodiment is started, first, the target passing through the passage part 50 is detected (step S101). The detection of the target may be performed after the target enters the passage part 50, or may be performed before the target enters the passage part 50 (e.g., in timing in which the target approaches in a predetermined distance range from the passage part 50). The detection of the target may be performed, for example, by using an image captured by the camera 18 or another camera, or by using various other sensors.

Then, the camera 18 captures an iris image of the target passing through the passage part 50 (step S102). The camera 18 may capture the iris image in timing in which the target reaches a predetermined image capture position (e.g., a focus position of the camera). Alternatively, it may capture a facial image of the target before capturing the iris image. In this case, an iris position of the target may be estimated from the facial image, and then, the iris image may be captured.

Then, the information processing system 10 performs the iris recognition on the target, by using the iris image of the target captured by the camera 18 (step S103). The iris recognition may be performed, for example, by the processor 11 (see FIG. 1) provided in the information processing system 10. Alternatively, the iris recognition may be performed by an authentication apparatus external to the system. Since existing techniques/technologies are applicable to a specific method for the iris recognition as appropriate, a detailed description will be omitted here.

Subsequently, the information processing system 10 determines whether or not the iris recognition is successful (step S104). In a case where the iris recognition is successful (step S104: YES), the information processing system 10 performs processing of opening a gate of the gate apparatus 200 (step S105). That is, it performs processing of opening a closed gate, permitting the target to pass through. On the other hand, in a case where the iris recognition is failed (step S104: NO), the step S105 described above is omitted. That is, the processing of opening the gate of the gate apparatus 200 is not performed, and the gate remains closed.

### (Configuration of Passage Part)

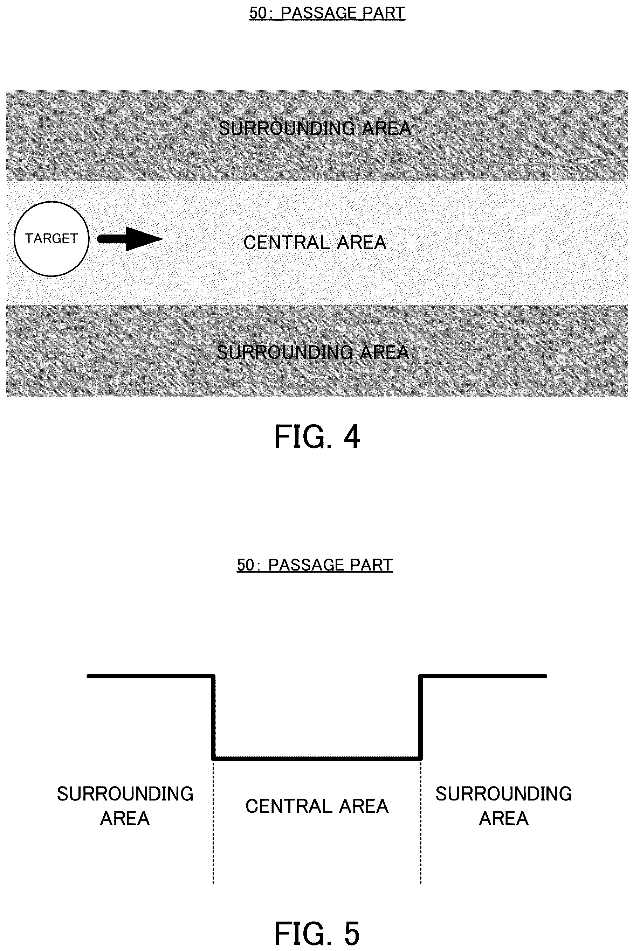

Next, with reference to FIG. 4 and FIG. 5, a configuration of the passage part in the information processing system 10 according to the first example embodiment will be described. FIG. 4 is a top view illustrating the configuration of the passage part of the information processing system according to the first example embodiment. FIG. 5 is a cross-sectional view illustrating the configuration of the passage part of the information processing system according to the first example embodiment.

As illustrated in FIG. 4, the passage part 50 in the information processing system 10 according to the first example embodiment includes a central area and surrounding areas provided around the central area. The central area is set as an area through which the target passes. On the other hand, the surrounding areas are set as areas through which the target should not pass. As illustrated in the figure, it is preferable that the surrounding areas are provided at both ends of the central area (i.e., right and left sides from the target's viewpoint). However, the surrounding area may be provided on only one side of the central area.

As illustrated in FIG. 5, from the target's viewpoint, the central area and the surrounding areas in the passage part 50 are formed to have different heights. Specifically, the central area through the target passes, is formed lower than the surrounding areas. The central area may be at the same height as that of a floor surface of a place where the passage part 50 is disposed. In this case, the surrounding areas may be formed higher than the floor surface. Alternatively, the central area may be formed (e.g., by carving/forming a groove) to be lower than the floor surface where the passage part 50 is disposed. In this case, the original floor surface may become the surrounding areas. Alternatively, the central area may be formed to be higher than the floor surface where the passage part 50 is disposed. In this case, the surrounding area may be formed even higher than the central area.

It is preferable that the passage part 50 is configured such that the target can easily perceive/understand a height difference between the central area and the surrounding areas. For this purpose, the central area and the surrounding areas may have different colors. Alternatively, at least one of the central area and the surrounding areas may be provided with marks, characters/text, and the like that can be visually recognized by the target.

### (Technical Effect)

Next, a technical effect obtained by the information processing system 10 according to the first example embodiment will be described.

As described in FIG. 1 to FIG. 5, in the information processing system 10 according to the first example embodiment, the passage part 50 through which the target passes, is configured to include the central area and the surrounding areas. In particular, the central area through which the target passes, is configured to be lower than the surrounding areas. This configuration guides the targets passing through the surrounding area, to pass through the central area. Consequently, it is possible to appropriately capture the iris image of the targets passing through the passage part 50. Specifically, by setting the image capture position of the camera 18 to be the central area, it is possible to more reliably include the iris of the target in an image capture range of the camera 18. Note that the camera 18 that captures the iris tends to have a narrow image capture range, due to its characteristics. Therefore, if the target passes through a location slightly deviated from the image capture position (e.g., the surrounding area), there is a possibility that the iris image of the target may not be captured, or that the quality of the iris image may deteriorate. In the present example embodiment, however, as described above, due to a shape of the passage part 50, the target is guided to pass through the central area (i.e., the image capture position of the camera 18). Consequently, it is possible to appropriately capture the iris image of the target.

### <Second Example Embodiment>

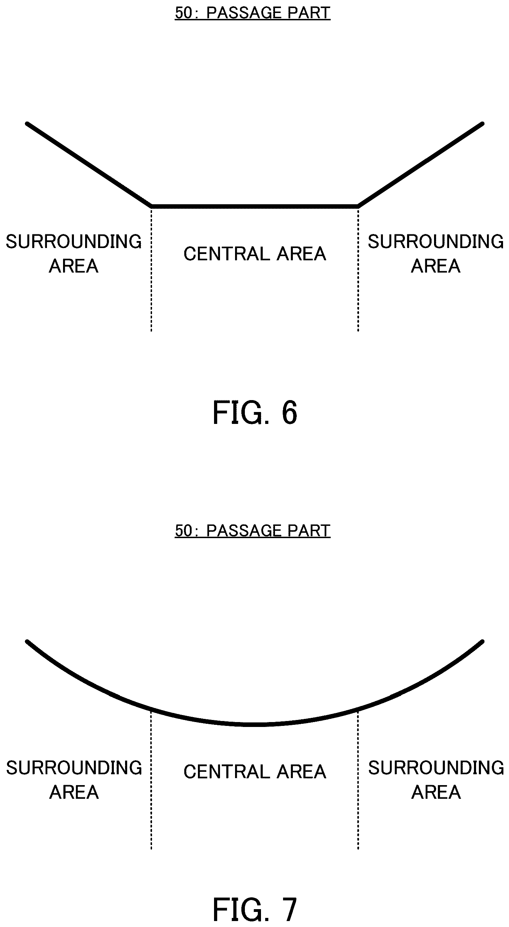

The information processing system 10 according to a second example embodiment will be described with reference to FIG. 6 and FIG. 7. The second example embodiment differs from the first example embodiment described above only in the configuration of the passage part, and may be the same as the first example embodiment in the other parts. Therefore, the following description will detail only a part differing from the already described first example embodiment, omitting a description of other overlapping parts as appropriate.

### (Configuration of Passage Part)

First, with reference to FIG. 6 and FIG. 7, a configuration of the passage part of the information processing system 10 according to the second example embodiment will be described. FIG. 6 is version 1 of a cross-sectional view illustrating the configuration of the passage part of the information processing system according to the second example embodiment. FIG. 7 is version 2 of a cross-sectional view illustrating the configuration of the passage part of the information processing system according to the second example embodiment.

As illustrated in FIG. 6, the passage part 50 of the information processing system 10 according to the second example embodiment is configured such that, from the target's viewpoint, the surrounding areas are inclined relative to the central area. More specifically, the central area is configured to be horizontal, while the surrounding areas are configured to be inclined relative to the horizontal. This configuration makes it easier to guide the target passing through the passage part 50, toward the central area. Specifically, since the surrounding areas are sloped and difficult to walk on, even if the target is passing through the surrounding area, the target is guided toward the central area that is easy to walk. Furthermore, since the surrounding areas are tilted toward the central area, the target is naturally guided toward the central area even without realizing it.

As illustrated in FIG. 7, the passage part 50 of the information processing system 10 according to the second example embodiment may be configured such that, from the target's viewpoint, the central area and the surrounding areas are curved integrally. More specifically, the central area and the surrounding areas may be curved such that the central area is the lowest and the surrounding areas are higher than the central area. This configuration makes it easier to guide the target passing through the passage part 50, toward the central area. Specifically, since the surrounding areas have a steep slope, making it difficult to walk on, even if the target is passing through the surrounding area, the target is guided toward the central area that is easy to walk. Furthermore, since the surrounding areas are tilted toward the central area, the target is naturally guided toward the central area even without realizing it.

### <Third Example Embodiment>

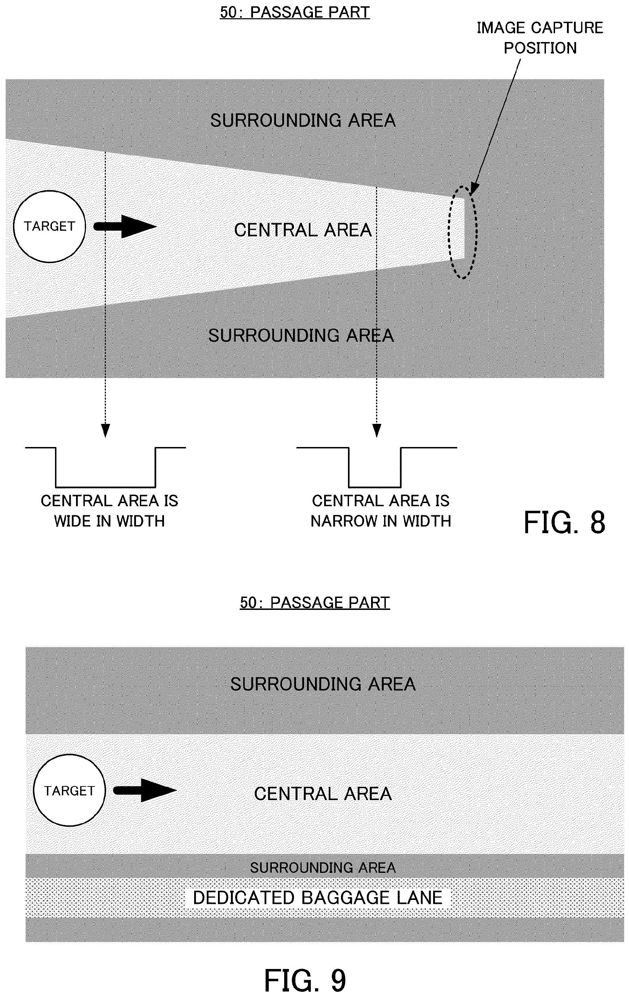

The information processing system 10 according to a third example embodiment will be described with reference to FIG. 8. The third example embodiment differs from the first and second example embodiments described above only in the configuration of the passage part, and may be the same as the first and second example embodiments in the other parts. Therefore, the following description will detail only a part differing from the already described example embodiments, omitting a description of other overlapping parts as appropriate.

### (Configuration of Passage Part)

First, with reference to FIG. 8, a configuration of the passage part of the information processing system 10 according to the third example embodiment will be described. FIG. 8 is a top view illustrating the configuration of the passage part of the information processing system according to the third example embodiment.

As illustrated in FIG. 8, the passage part 50 of the information processing system 10 according to the third example embodiment is configured such that the central area gradually becomes narrower in width as the target advances. Specifically, a configuration near an entrance of the passage part 50 is that the central area is wide in width, and the surrounding areas are narrow in width. Furthermore, a configuration at a point distant to some extent from the entrance of the passage part 50, is that the central area is narrow in width, and the surrounding areas are wide in width.

Furthermore, a point where the central area is the narrowest in width, is set as an image capture position for the iris by the camera 18. This image capture position is adjusted, for example, to be the focus position of the camera 18, and the iris image is captured in timing in which the target reaches the image capture position. In the example illustrated in the figure, the central area is interrupted at the image capture position, but the central area may continue beyond the image capture position. In this case, the width of the central area beyond the image capture position may not change (i.e., may remain narrow). Alternatively, the central area may be configured to be wider in width beyond the image capture position.

### (Technical Effect)

Next, a technical effect obtained by the information processing system 10 according to the third example embodiment will be described.

As described in FIG. 8, the information processing system 10 according to the third example embodiment is configured such that the central area gradually becomes narrower in width. This allows the target passing through the passage part 50 to be guided gradually toward a central part of the central area (i.e., the image capture position). Consequently, it is possible to more appropriately capture the iris image of the target.

### <Fourth Example Embodiment>

The information processing system 10 according to a fourth example embodiment will be described with reference to FIG. 9. The fourth example embodiment differs from the first to third example embodiments described above only in the configuration of the passage part, and may be the same as the first to third example embodiments in the other parts. Therefore, the following description will detail only a part differing from the already described example embodiments, omitting a description of other overlapping parts as appropriate.

### (Configuration of Passage Part)

First, with reference to FIG. 9, a configuration of the passage part of the information processing system 10 according to the fourth example embodiment will be described. FIG. 9 is a top view illustrating the configuration of the passage part of the information processing system according to the fourth example embodiment.

As illustrated in FIG. 9, the passage part 50 of the information processing system 10 according to the fourth example embodiment includes a dedicated baggage lane in the surrounding area. The dedicated baggage lane is a lane provided to allow baggage carried by the target passing through the passage part 50 to pass through. The dedicated baggage lane may be configured to be at the same height as that of the surrounding area or at a different height. For example, the dedicated baggage lane may be configured to be lower than the surrounding area (e.g., to be at the same height as that of the central area). In the example in FIG. 9, the dedicated baggage lane is provided in the surrounding area on a right side as seen from the target, but it may also be provided in the surrounding area on a left side as seen from the target.

The dedicated baggage lane may be installed, for example, to allow the target passing through the central area, to pass through with the baggage. That is, the dedicated baggage lane may be positioned within reach from the central area. Alternatively, the dedicated baggage lane may be configured such that even if the target passing through the passage part 50 releases the baggage, the baggage is automatically transferred to a side of the gate. For example, a belt conveyor may be installed in the dedicated baggage lane. In this case, an apparatus for inspecting the contents of the baggage (e.g., a monitoring apparatus using X-rays, etc.) may be installed in the middle of the belt conveyor.

### (Technical Effect)

Next, a technical effect obtained by the information processing system 10 according to the fourth example embodiment will be described.

As described in FIG. 9, in the information processing system 10 according to the fourth example embodiment, the dedicated baggage lane is provided in the surrounding area. This allows the target to easily pass through the passage part 50 even when the target is carrying the baggage. Such a technical effect is remarkably exhibited, for example, in a case where the passage part 50 is narrow and sufficient width cannot be secured for the central area.

### <Fifth Example Embodiment>

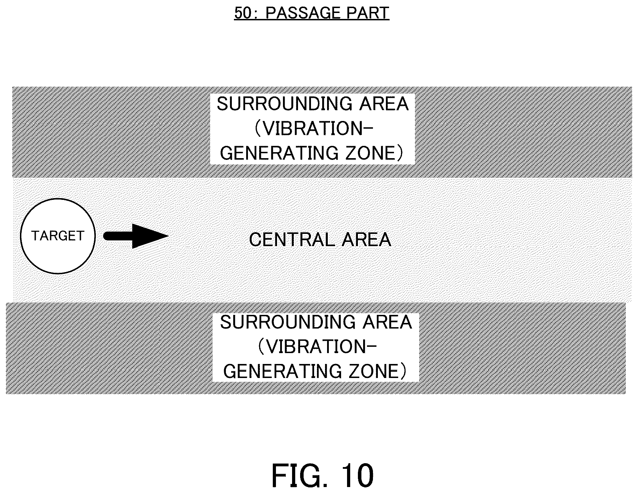

The information processing system 10 according to a fifth example embodiment will be described with reference to FIG. 10. The fifth example embodiment differs from the first to fourth example embodiments described above only in the configuration of the passage part, and may be the same as the first to fourth example embodiments in the other parts. Therefore, the following description will detail only a part differing from the already described example embodiments, omitting a description of other overlapping parts as appropriate.

### (Configuration of Passage Part)

First, with reference to FIG. 10, a configuration of the passage part of the information processing system 10 according to the fifth example embodiment will be described. FIG. 10 is a top view illustrating the configuration of the passage part of the information processing system according to the fifth example embodiment.

As illustrated in FIG. 10, the passage part 50 of the information processing system 10 according to the fifth example embodiment is configured such that the surrounding areas are vibration-generating zones. The vibration-generating zone is an area where vibrations occur when a target passes through. The vibration-generating zone may be set to cover the entire surrounding area, as illustrated in the figure. Alternatively, the vibration-generating zone may be set partially in the surrounding area. That is, the surrounding area may include both a part that is the vibration-generating zone and a part that is not the vibration-generating zone.

The vibration-generating zone may be configured to generate vibrations not only when the target passes through it, but also when the baggage carried by the target (e.g., a bag with casters) passes through it. The vibration-generating zone may include, for example, members with fine irregularities. Alternatively, the vibration-generating zone may use a motor or another power source to generate vibrations. In this case, the passage part 50 may be provided with a sensor or the like that detects the target passing through the surrounding area, and vibrations may be generated upon detection of the target.

### (Technical Effect)

Next, a technical effect obtained by the information processing system 10 according to the fifth example embodiment will be described.

As described in FIG. 10, in the information processing system 10 according to the fifth example embodiment, the vibration-generating zones are provided in the surrounding areas. In this way, the target passing through the surrounding area is notified, by vibrations, that the target is passing through the surrounding area. As a result, the target moves from the surrounding area to the central area where vibrations are not generated. That is, in the fifth example embodiment, it is possible to guide the target by using vibration, in addition to the height difference between the central area and the surrounding areas.

### <Sixth Example Embodiment>

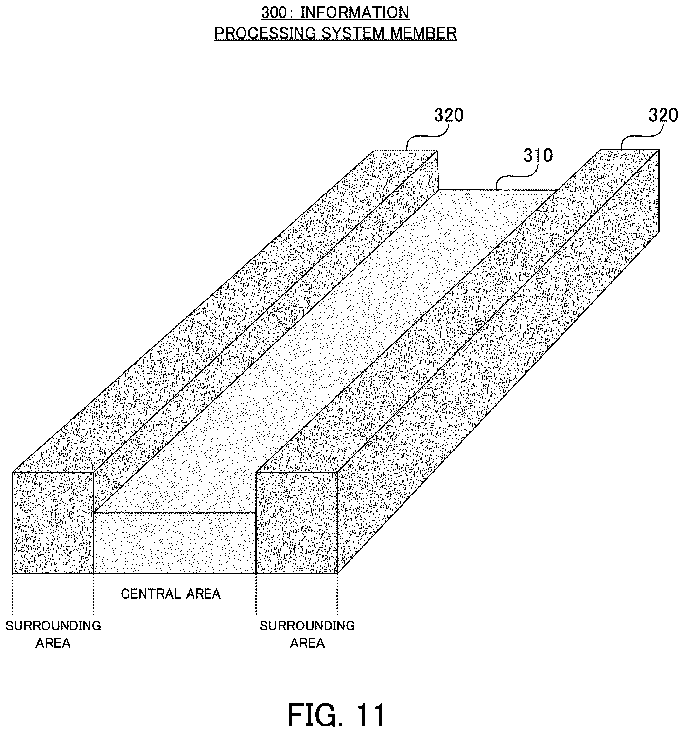

With reference to FIG. 11, an information processing system member according to a sixth example embodiment will be described. The information processing system member described in the sixth example embodiment is a member for forming the information processing system (more specifically, the passage part 50) described in the aforementioned first to fifth example embodiments.

### (Configuration of Member)

First, with reference to FIG. 11, a configuration of the information processing system member according to the sixth example embodiment will be described. FIG. 11 is a perspective view illustrating the configuration of the information processing system member according to the sixth example embodiment.

As illustrated in FIG. 11, an information processing system member 300 according to the sixth example embodiment includes a first member 310 that forms the central area and second members 320 that form the surrounding areas. The first member 310 is configured as a member that is thinner than the second members 320. By this, the central area is formed as a lower area than the surrounding areas. Note that the first member 310 and the second members 320 may be joined together and formed as a single member, or may be formed as separate members. The first member 310 and the second members 320 may be composed of different materials. The materials that constitute the first member 310 and the second member 320 may include various materials used for a floor surface, such as, for example, wood, resin, and metal.

The information processing system member 300 is manufactured by molding various materials into a shape illustrated in FIG. 11. In this process, the first member 310 and the second members 320 may be molded separately. Alternatively, the first member 310 and the second members 320 may be integrally molded together.

### (Technical Effect)

Next, a technical effect obtained by the information processing system member 300 according to the sixth example embodiment will be described.

As described in FIG. 11, the information processing system member 300 according to the sixth example embodiment is configured such that the height of the first member 310 is different from that of the second members. The use of such an information processing system member 300 makes it possible to easily install the passage part including the central area and the surrounding area(s) with different heights (i.e., the passage part 50 in the information processing system 10 described in the first to fifth example embodiments). Furthermore, the information processing system member 300 according to the sixth example embodiment especially includes the first member 310 that forms the central area and the second members 320 that form the surrounding areas. This allows the formation of the central area and the surrounding areas with different heights, regardless of a state of an installation location.

### <Seventh Example Embodiment>

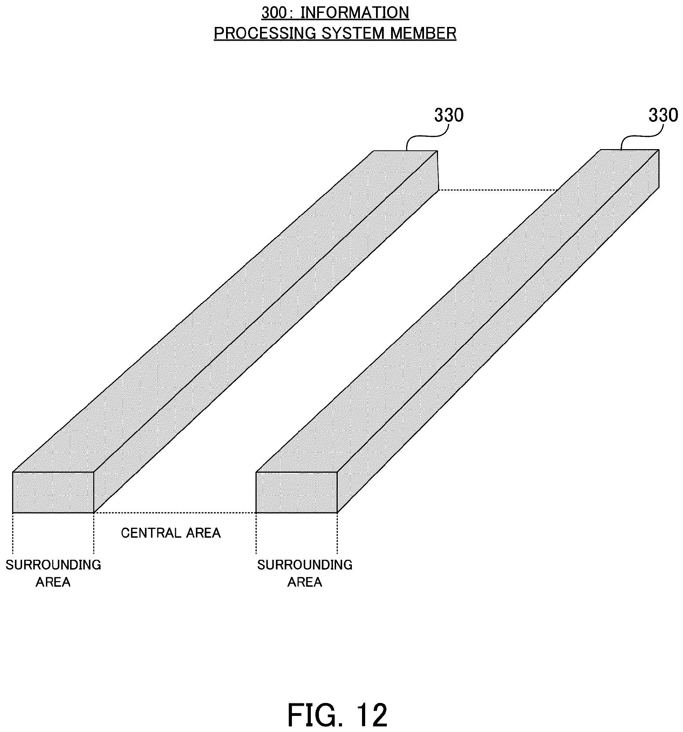

The information processing system 10 according to a seventh example embodiment will be described with reference to FIG. 12. The seventh example embodiment partially differs from the sixth example embodiment described above only in its configuration, and may be the same as the sixth example embodiment in the other parts. Therefore, the following description will detail only a part differing from the already described example embodiments, omitting a description of other overlapping parts as appropriate.

### (Configuration of Member)

First, with reference to FIG. 12, a configuration of the information processing system member according to the seventh example embodiment will be described. FIG. 12 is a perspective view illustrating the configuration of the information processing system member according to the seventh example embodiment.

As illustrated in FIG. 12, the information processing system member 300 according to the seventh example embodiment includes surrounding members 330 that form the surrounding areas. Note that the information processing system member 300 according to the seventh example embodiment does not include the member for forming the central area, as described in the sixth example embodiment (see FIG. 11). In the seventh example embodiment, a floor surface between locations where the surrounding members 330 are installed, is the central area.

### (Technical Effect)

Next, a technical effect obtained by the information processing system member 300 according to the seventh example embodiment will be described.

As described in FIG. 12, the information processing system member 300 according to the seventh example embodiment includes the surrounding members 330 that form the surrounding areas. This allows the floor of the installation location to be used as the central area, while forming the surrounding areas with different heights by using the surrounding members 330. In comparison with the information processing system member 300 according to the sixth example embodiment (see FIG. 11), the information processing system member 300 according to the seventh example embodiment does not require a part corresponding to the central area. This prevents an increase in size and cost of the member. Furthermore, since an original floor height is the height of the central area, it is possible to prevent/control an increase in the height of the floor surface caused by installing the member.

The information processing system member 300 according to the sixth and seventh example embodiments may be configured to allow attachment of another member. For example, it may include a part (e.g., a dedicated attachment, etc.) to which the gate apparatus 200 or the camera 18 described in the first example embodiment is attached. Alternatively, the information processing system member 300 may be a member with the gate apparatus 200 and the camera 18 already attached thereto. In this case, simply placing the information processing system member 300 on the floor allows the information processing system 10 described in the first to fifth example embodiments to be installed.

The sixth and seventh example embodiments describe the information processing system member 300 having a shape corresponding to the passage part described in the first example embodiment (see FIG. 5), but the shape of the information processing system member 300 is not limited to this. For example, the information processing system member 300 may be configured such that the members that form the surrounding areas are inclined, as described in the second example embodiment (see FIG. 6), or such that the members that form the central area and the surrounding areas are integrally curved (see FIG. 7). The information processing system member 300 may be configured such that the part that forms the central area gradually becomes narrower in width, as described in the third example embodiment (see FIG. 8). The information processing system member 300 may include the dedicated baggage lane in the part that forms the surrounding area, as described in the fourth example embodiment (see FIG. 9). The information processing system member 300 may be configured such that the parts that form the surrounding areas generate vibrations, as described in the fifth example embodiment (see FIG. 10).

### <Supplementary Notes>

The example embodiments described above may be further described as, but not limited to, the following Supplementary Notes below.

### (Supplementary Note 1)

An information processing system according to Supplementary Note 1 is an information processing system including: a passage part through which a user passes; and an iris capture unit that captures an image of an iris of the user passing through the passage part, wherein the passage part is formed such that a central area through which the user passes is lower than surrounding areas around the central area.

### (Supplementary Note 2)

An information processing system according to Supplementary Note 2 is the information processing system according to Supplementary Note 1, wherein the passage part is formed such that the surrounding areas are inclined relative to the central area, or such that the central area and the surrounding areas are integrally curved.

### (Supplementary Note 3)

An information processing system according to Supplementary Note 3 is the information processing system according to Supplementary Note 1 or 2, wherein the passage part is formed such that the central area becomes narrower as it is closer to the iris capture unit.

### (Supplementary Note 4)

An information processing system according to Supplementary Note 4 is the information processing system according to Supplementary Note 3, wherein the passage part is formed to have a narrowest width at an image capture position where the iris capture unit captures the image of the user.

### (Supplementary Note 5)

An information processing system according to Supplementary Note 5 is the information processing system according to any one of Supplementary Notes 1 to 4, wherein the surrounding area has a baggage passage area for allowing baggage carried by the user to pass through.

### (Supplementary Note 6)

An information processing system according to Supplementary Note 6 is the information processing system according to any one of Supplementary Notes 1 to 5, wherein the surrounding areas are formed such that vibrations are generated in response to the user passing through it.

### (Supplementary Note 7)

An information processing system member according to Supplementary Note 7 is an information processing system member to be used in an information processing system including an iris capture unit that captures an image of an iris of a user passing through a passage part, the information processing system member including: an area formation unit that forms the passage part such that a central area through which the user passes is lower than surrounding areas around the central area.

### (Supplementary Note 8)

An information processing system member according to Supplementary Note 8 is the information processing system member according to Supplementary Note 7, wherein the area formation unit includes a first member that forms the central area, and second members that form the surrounding areas, the second members having a height that is greater than that of the first member.

### (Supplementary Note 9)

An information processing system member according to Supplementary Note 9 is the information processing system member according to Supplementary Note 7, wherein the area formation unit includes surrounding members that form the surrounding areas around the central area such that a floor surface at an installation location is the central area.

### (Supplementary Note 10)

A method for manufacturing an information processing system member according to Supplementary Note 10 is a method for manufacturing an information processing system member to be used in an information processing system including an iris capture unit that captures an image of an iris of a user passing through a passage part, the method including: forming an area formation unit that forms the passage part such that a central area through which the user passes is lower than surrounding areas around the central area.

The present disclosure is allowed to be changed, if desired, without departing from the essence or spirit of this disclosure which can be read from the claims and the entire specification. An information processing system, a member for the information processing system, and a method for manufacturing the member for the information processing system with such changes are also intended to be within the technical scope of the present disclosure.

### Description of Reference Codes

10 Information processing system
11 Processor
18 Camera
50 Passage part
200 Gate apparatus
300 Member for information processing system
310 First member
320 Second member
330 Surrounding member

## Claims

1. An information processing system comprising:
a passage part through which a user passes; and
an iris capture unit that captures an image of an iris of the user passing through the passage part, wherein
the passage part is formed such that a central area through which the user passes is lower than surrounding areas around the central area.

2. The information processing system according to claim 1, wherein the passage part is formed such that the surrounding areas are inclined relative to the central area, or such that the central area and the surrounding areas are integrally curved.

3. The information processing system according to claim 1 or 2, wherein the passage part is formed such that the central area becomes narrower as it is closer to the iris capture unit.

4. The information processing system according to claim 3, wherein the passage part is formed to have a narrowest width at an image capture position where the iris capture unit captures the image of the user.

5. The information processing system according to claim 1 or 2, wherein the surrounding area has a baggage passage area for allowing baggage carried by the user to pass through.

6. The information processing system according to claim 1 or 2, wherein the surrounding areas are formed such that vibrations are generated in response to the user passing through it.

7. An information processing system member to be used in an information processing system including an iris capture unit that captures an image of an iris of a user passing through a passage part, the information processing system member comprising:
an area formation unit that forms the passage part such that a central area through which the user passes is lower than surrounding areas around the central area.

8. The information processing system member according to claim 7, wherein the area formation unit includes
a first member that forms the central area, and
second members that form the surrounding areas, the second members having a height that is greater than that of the first member.

9. The information processing system member according to claim 7, wherein the area formation unit includes
surrounding members that form the surrounding areas around the central area such that a floor surface at an installation location is the central area.

10. A method for manufacturing an information processing system member to be used in an information processing system including an iris capture unit that captures an image of an iris of a user passing through a passage part, the method comprising:
forming an area formation unit that forms the passage part such that a central area through which the user passes is lower than surrounding areas around the central area.
